# EUROPEAN PATENT SPECIFICATION

(11) **EP 0 550 602 B1**
(45) Date of publication and mention of the grant of the patent: **22.05.1996**
(21) Application number: 91917535.6
(22) Date of filing: 26.09.1991
(51) Int. Cl.: B60H 1/00

(54) **A DEVICE FOR CREATING A FLOW OF AIR AROUND A TEMPERATURE SENSOR**
VORRICHTUNG ZUR ERZEUGUNG EINER LUFTSTROM UM EINEM TEMPERATURSENSOR
DISPOSITIF SERVANT A CREER UN FLUX D'AIR AUTOUR D'UN CAPTEUR DE TEMPERATURE

(30) Priority: 26.09.1990 SE 9003054
(43) Date of publication of application: 14.07.1993
(73) Proprietor: AB VOLVO, S-405 08 Göteborg (SE)
(72) Inventor: BERGSTRÖM, Kjell, A., C., S-412 55 Göteborg (SE)
(74) Representative: Hellbom, Lars Olof
(86) International application number: SE9100650
(87) International publication number: WO9205044

(56) References cited:
- EP-A- 0 159 404
- DE-C- 3 033 624
- DE-C- 3 541 263

## Description

The present invention relates to a device for creating a flow of air around a temperature sensor disposed in the passenger compartment of a vehicle having a turbo charged engine, said temperature sensor belonging to a climate control unit.

It is previously known to utilize the subatmospheric pressure in the intake pipe of an internal combustion engine to provide air flow about a temperature sensor belonging to the vehicle climate control unit and disposed in the passenger compartment by having a hose, one end of which is connected to the intake pipe and the other end of which has its mouth in the vicinity of the temperature sensor. Such devices do not work, however, when the turbo-unit in a vehicle with a turbo-charged engine is engaged, since there would then be excess pressure in the intake pipe.

The present invention intends to solve this problem and provide a device of the type described by way of introduction which is effective when the turbo-unit is engaged.

In order to achieve this purpose, a device of the type described by way of introduction is characterized by a jet pump having an inlet connected to a charge air conduit and an outlet connected to a suction air conduit of the turbo-charger, and a conduit having one end opening into the passenger compartment in the vicinity of the temperature sensor and an opposite end connected to a suction channel communicating with a jet pump channel running between the inlet and the outlet of the pump.

Furthermore, the jet pump is preferably dimensioned such that that the negative pressure in the conduit communicating with the passenger compartment is of the same size regardless whether the turbo-charger is creating an overpressure in the charge air conduit or not. This assures that the operating state of the turbo-charged engine will not affect the functioning of the temperature sensor and thus the climate control unit.

One embodiment of the invention will now be described with reference to the accompanying drawings, of which
Figures 1 and 2 show schematically a device according to the invention mounted in a vehicle with a turbo-charged engine in one view from above and one view from the side, respectively, and
Figure 3 shows schematically one longitudinal section through a jet pump used in the device shown in Figures 1 and 2.

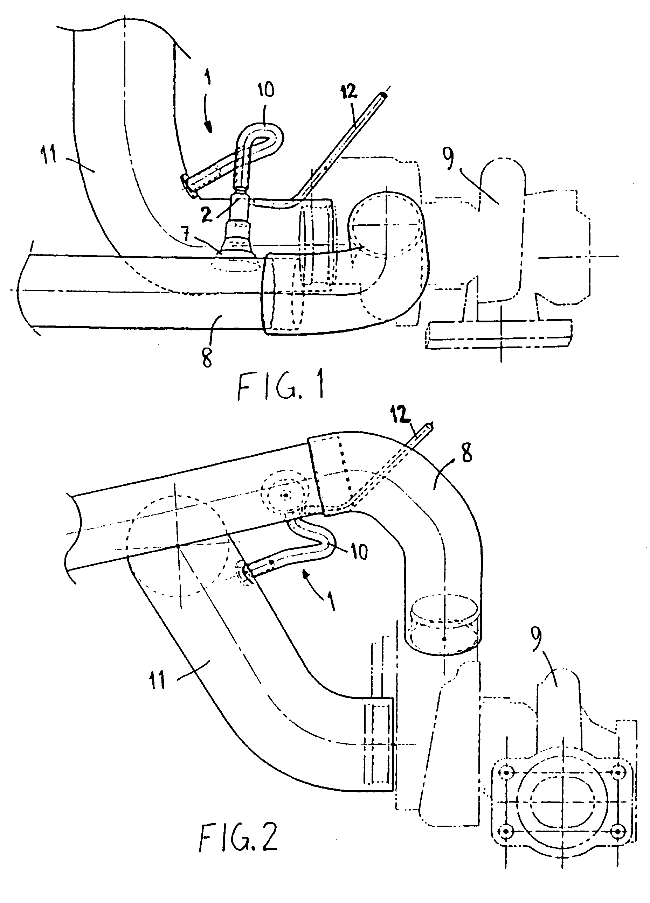

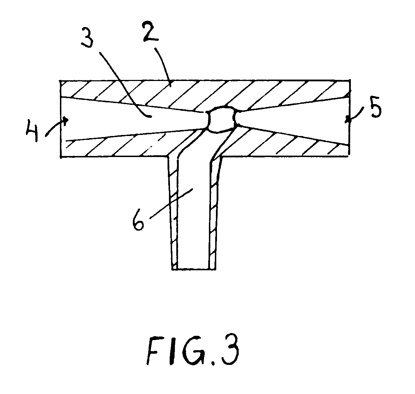

Figures 1 and 2 show one embodiment of the device 1 according to the invention for providing air flow about a temperature sensor (not snown), which is placed in the vehicle passenger compartment and is included in the climate control unit of the vehicle. This device comprises a jet pump or ejector pump 2, which, as can be seen in Figure 3, has a converging-diverging main channel 3, connecting the inlet 4 to the outlet 5 of the jet pump. A suction channel 6 opens into the narrower section of the main channel. As is well known to the person skilled in the art, such a jet pump functions by accelerating the air flow in the converging portion of the main channel 3, whereupon the air in the main channel is brought to such a high velocity that the ejector effect sucks air from the suction channel 6 creating a subatmosphere pressure therein. In the diverging portion of the main channel 3, the air flow is retarded at the same time as the air expands, thus creating a pressure drop in the air flowing in this portion of the channel.

In the device 1, the inlet 4 to the jet pump is connected via a connector 7 to the charge air pipe 8 of a turbo-charged engine, i.e. to the pressure side of a turbo unit, the compressor 9 of which is shown schematically in Figures 1 and 2.

The outlet 5 of the jet pump is connected via a hose 10 to a fresh air hose 11 leading to the air intake of the turbo compressor 9, i.e. to the suction side of the turbo-unit.

The suction channel 6 of the jet pump leads via a conduit 12, preferably in the form of a flexible hose, to a temperature sensor (not shown) placed in the vehicle passenger compartment in such a manner that suction in the hose 12 creates air flow about the temperature sensor. Suitably, this is achieved in the same manner as in a previously known device of this type, in which a hose connected to the intake pipe of a suction engine opens in the vicinity of the temperature sensor, which is placed in a ceiling lamp housing in the vehicle passenger compartment. Other arrangements obvious to the person skilled in the art are, of course, conceivable within the scope of the invention, but the temperature sensor is preferably surrounded by a housing or the like to insure uniform air flow about the sensor and reduce the magnitude of the suction necessary to provide the required air flow about the sensor.

The device according to the invention functions in the following manner.

When the turbo unit is engaged, an overpressure in the charge air pipe creates air flow through the main channel 3 of the jet pump in the direction from the inlet to the outlet. Through the ejector effect, air is sucked from the suction channel 6 and suction is created thereby in the hose 12 to the vehicle passenger compartment, and this suction is sufficient to provide adequate air flow about the temperature sensor.

## Claims

1. A device for creating a flow of air around a temperature sensor disposed in the passenger compartment of a vehicle having a turbo charged engine, said temperature sensor belonging to a climate control unit, characterized by a jet pump (2) having an inlet connected to a charge air conduit (8) and an outlet connected to a suction air conduit (11) of the turbo-charger, and a conduit (12) having one end opening into the passenger compartment in the vicinity of the temperature sensor and an opposite end connected to a suction channel communicating with a jet pump channel (3) running between the inlet (4) and the outlet (5) of the pump.

2. A device according to claim 1, characterized in that the jet pump is dimensioned such that the negative pressure in the conduit (12) communicating with the passenger compartment is of the same size regardless whether the turbo-charger is creating an overpressure in the charge air conduit (8) or not.

## Patentansprüche

1. Vorrichtung zur Erzeugung eines Luftstroms um einen Temperatursensor, der in der Fahrgastzelle eines Fahrzeuges angeordnet ist, das seinerseits einen turbo-aufgeladenen Motor hat, wobei der Temperatursensor zu einer Klimasteuereinheit gehört,
**gekennzeichnet** durch eine Strahlpumpe (2), die einen Einlaß hat, der mit einer Ladeluftleitung (8) verbunden ist und einen Auslaß, der mit einer Saugluftleitung (11) des Turboladers in Verbindung steht und schließlich durch eine Leitung (12), deren eines Ende sich in der Nähe des Temperatursensors in die Fahrgastzelle hinein öffnet und deren anderes Ende mit einem Saugkanal in Verbindung steht, der seinerseits mit einem Strahlpumpenkanal (3) in Verbindung steht, der zwischen dem Einlaß (4) und dem Auslaß (5) der Pumpe verläuft.

2. Vorrichtung nach Anspruch 1, dadurch gekennzeichnet, daß die Strahlpumpe so bemessen ist, daß der Unterdruck in der Leitung (12), die mit der Fahrgastzelle in Verbindung steht, unabhängig davon, ob der Turbolader in der Ladeluftleitung (8) einen Überdruck erzeugt oder nicht, stets dieselbe Größe hat.

## Revendications

1. Dispositif pour créer un flux d'air autour d'un capteur de température disposé dans le compartiment passager d'un véhicule comportant un moteur turbo-compressé, le capteur de température appartenant à une unité de commande de climatisation, caractérisé par un injecteur (2) comportant une entrée raccordée à un conduit d'air de compression (8) et une sortie raccordée à un conduit d'air d'aspiration (11) du turbo-compresseur, et un conduit (12) comportant une extrémité s'ouvrant dans le compartiment passager au voisinage du capteur de température et une extrémité opposée raccordée à un canal d'aspiration communiquant avec un canal d'injecteur (3) s'étendant entre l'entrée (4) et la sortie (5) de l'injecteur.

2. Dispositif selon la revendication 1, caractérisé en ce que l'injecteur est dimensionné de manière que la pression négative dans le conduit (12) communiquant avec le compartiment passager soit de la même dimension indépendamment du fait que le turbo-compresseur crée ou non une surpression dans le conduit d'air de compression (8).
